# EUROPÄISCHE PATENTSCHRIFT

(11) **EP 1 839 840 B1**
(45) Veröffentlichungstag und Bekanntmachung des Hinweises auf die Patenterteilung: **30.12.2009**
(21) Anmeldenummer: 06006823.6
(22) Anmeldetag: 31.03.2006
(51) Int. Cl.: B29C 47/08

(54) **Antriebs-Einheit für eine Zwei-Schnecken-Maschine**
Drive unit for twin screw machine
Unité d'entraînement pour machine à deux vis

(43) Veröffentlichungstag der Anmeldung: 03.10.2007
(73) Patentinhaber: Coperion GmbH, 70469 Stuttgart (DE)
(72) Erfinder: Schwendemann, Daniel, Dipl.-Ing., 88630 Pfullendorf (DE); Weller, Ulrich, 74379 Ingersheim (DE); Kölbel, Roland, 71336 Waiblingen (DE)
(74) Vertreter: Rau, Manfred

(56) Entgegenhaltungen:
- WO-A-03/095178
- DE-A1- 10 329 035
- "OHNE GETRIEBE" PLASTVERARBEITER, HUETHIG GMBH, HEIDELBERG, DE, Bd. 53, Nr. 9, September 2002 (2002-09), Seiten 84-85, XP001116280 ISSN: 0032-1338

## Beschreibung

Die Erfindung betrifft eine Antriebs-Einheit für eine gleichsinnig drehantreibare Zwei-Schnecken-Maschine, deren Schnecken-Wellen einen Achsabstand aufweisen.

Da bei derartigen Schnecken-Maschinen die Schnecken ineinander greifen, ist der Achsabstand deutlich kleiner als der Außendurchmesser der jeweiligen Schnecken. Die in der Regel als Keilwellen ausgebildeten Schnecken-Wellen haben daher nur einen verhältnismäßig geringen freien Abstand voneinander, so dass der Antrieb in der Regel von einem Antriebs-Motor über ein entsprechend aufwändiges Verzweigungs-Getriebe erfolgt, dem ein Untersetzungs-Getriebe vorgeordnet oder zugeordnet ist.

Aus der WO 03/095178 A1 ist es bereits bekannt geworden, einen Torque-Motor als Direktantrieb für einen gleichsinnig drehenden Mehrwellenextruder einzusetzen. Dieser als Hohlwellen-Motor ausgebildete Torque-Motor weist am Innenumfang seines hohlen Rotors eine Innenverzahnung auf, an der auf den Abtriebs-Wellen angebrachte Zahnkränze abrollen. Die Abtriebs-Wellen sind unter anderem in im hohlen Rotor angeordneten Radial-Lagern abgestützt. Die Axial-Kräfte müssen anderweitig aufgefangen werden. Diese bekannte Lösung ist aufwändig und nur für relativ kleine Extruder einsetzbar.

Aus der Zeitschrift "Kunststoffe" 9/2004 ist es weiterhin bekannt, Ein-Schnecken-Extruder mittels Torque-Motoren anzutreiben.

Der Erfindung liegt die Aufgabe zugrunde, eine Antriebs-Einheit der allgemeinen Gattung zu schaffen, die einen Direkt-Antrieb der Schnecken-Wellen ermöglicht und bei größeren Schnecken-Maschinen einsetzbar ist.

Diese Aufgabe wird erfindungsgemäß durch die Merkmale des Anspruches 1 gelöst.

Dadurch, dass die Abtriebs-Zahnritzel jeweils beidendig außerhalb des Stator-Gehäuses angeordnet sind, und in jeweils in den auf jeder Abtriebs-Welle angebrachten Zahnkranz eingreifen, ist keine Baugrößenbeschränkung vorgegeben. Im Übrigen ist der Aufwand für eine solche Übertragung verhältnismäßig gering. Insbesondere können hierbei entsprechend Anspruch 5 zwei Antriebs-Motoren einander gegenüberliegend eingesetzt werden, die auch einen großen Teil der beim Antrieb auftretenden Radialkräfte kompensieren. Diese Ausgestaltung ist insbesondere für große Extruder einsetzbar.

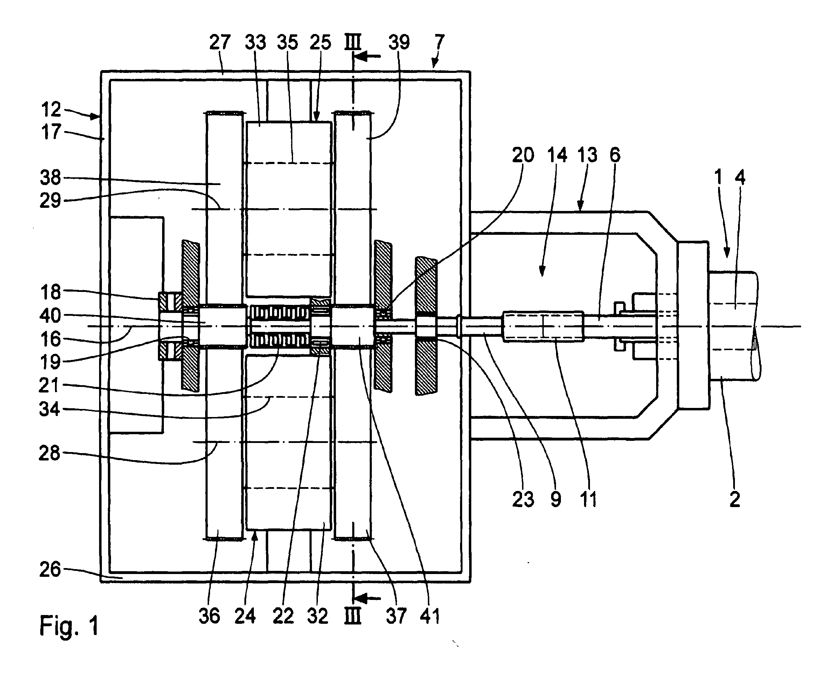

Weitere Merkmale, Vorteile und Einzelheiten der Erfindung ergeben sich aus der Erfindung ergeben sich aus der nachfolgenden Beschreibung eines Ausführungsbeispiels anhand der Zeichnung. Es zeigt
- Fig. 1: eine Seitenansicht einer Extruder-Einheit mit einer Antriebs-Einheit nach der Erfindung in schematischer Darstellung,
- Fig. 2: eine Draufsicht auf die Extruder-Einheit nach Fig. 1 und
- Fig. 3: einen Schnitt durch die Antriebs-Einheit entsprechend der Schnittlinie III-III in Fig. 1.

Der in der Zeichnung dargestellte Extruder 1 weist ein nur angedeutetes Gehäuse 2 auf, in dem einander teilweise durchdringende Bohrungen 3, 4 ausgebildet sind. In den Bohrungen 3, 4 sind Schnecken-Wellen 5,6 angeordnet, auf denen nicht dargestellte Schneckenelemente, Knetscheiben und dergleichen angeordnet sind.

Der Antrieb der Schnecken-Wellen 5, 6 erfolgt mittels einer Antriebs-Einheit 7, deren Abtriebs-Wellen 8,9 mittels Kupplungs-Hülsen 10,11 mit den Schnecken-Wellen 5, 6 jeweils drehfest verbunden sind. Die Antriebs-Einheit 7 weist ein Gehäuse 12 auf, das mit dem Gehäuse 2 des Extruders 1 mittels einer sogenannten Laterne 13 verbunden ist. Der Bereich innerhalb der Laterne 13 mit den die Abtriebs-Wellen 8, 9 und die Schnecken-Wellen 5, 6 verbindenden Kupplungs-Hülsen 10, 11 bildet eine Kupplung 14 zwischen Antriebs-Einheit 7 und Extruder 1. Die Bohrungen 3, 4 die Schnecken-Wellen 5, 6 und die Abtriebs-Wellen 8, 9 haben jeweils eine gemeinsame durchgehende Achse 15 bzw. 16. Soweit der Aufbau der Extruder-Einheit bis hierher beschrieben ist, ist er in der Praxis ganz allgemein üblich und verbreitet.

Jeweils eine Abtriebs-Welle 8 bzw. 9 ist koaxial zu der von ihr angetriebenen Schnecken-Welle 5, 6 angeordnet, und zwar über die volle Länge der Abtriebs-Welle 8, 9 im Gehäuse 12 der Antriebs-Einheit 7. Eine Abtriebs-Welle 8 erstreckt sich durch das Gehäuse 12 und ist dort im Bereich von dessen Rückwand 17 mittels eines Axial-Lagers 18 abgestützt. Diese Abtriebs-Welle 8 ist weiterhin mittels zweier in Richtung der Achse 15 voneinander distanzierter Radial-Lager 19, 20 gegenüber dem Gehäuse 12 abgestützt. Die Abtriebs-Welle 9 ist ebenfalls mittels eines Axial-Lagers 21 und zweier voneinander beabstandeter Radial-Lager 22, 23 gegenüber dem Gehäuse 12 abgestützt. Die Axial-Lager 18,21 nehmen die sehr hohen in Richtung der Achsen 15, 16 wirkenden, vom Extruder 1 her kommenden Axial-Druckkräfte auf.

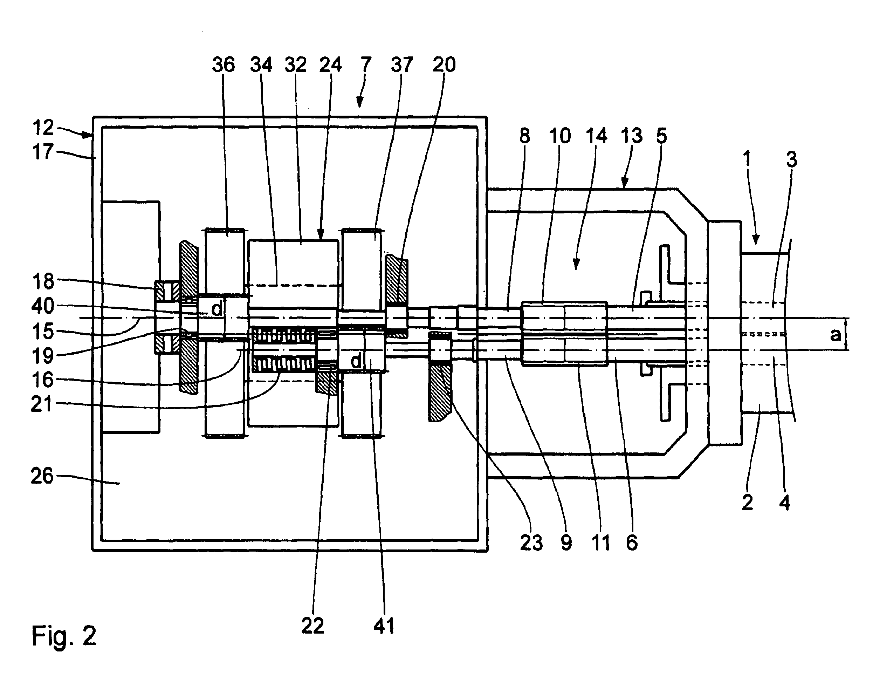

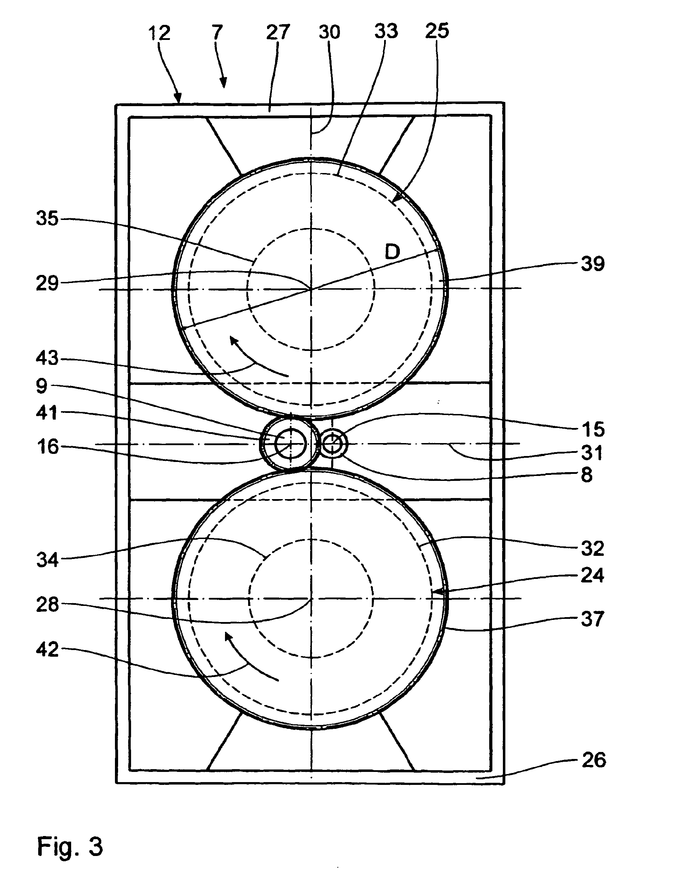

Der Antrieb der beiden Abtriebs-Wellen 8, 9 erfolgt im dargestellten Ausfiihrungsbeispiel mittels zweier Antriebs-Motoren 24, 25, von denen in Fig. 2 nur der untere Antriebs-Motor 24 dargestellt ist. Die beiden Antriebs-Motoren sind spiegelsymmetrisch zu der durch die beiden Achsen 15, 16 aufgespannten horizontalen Ebene 31 angeordnet und gegenüber dem Boden 26 bzw. der Deck-Wand 27 des Gehäuses 12 abgestützt. Die Dreh-Achsen 28, 29 der Motoren 24, 25 liegen in einer zu der durch die Achsen 15, 16 aufgespannten horizontale Ebene 31 senkrechten Ebene 30 und verlaufen parallel zu den Achsen 15, 16. Wie insbesondere Fig. 3 entnehmbar ist, schneidet die durch die Dreh-Achsen 28, 29 aufgespannte vertikale Ebene 30 die durch die Achsen 15, 16 aufgespannte horizontale Ebene 31 genau mittig zwischen den Achsen 15, 16.

Bei den Antriebs-Motoren 24, 25 handelt es sich um sogenannte Torque-Motoren, also um Motoren, die auch bei sehr niedrigen Drehzahlen ein hohes Drehmoment abgeben, so dass sie zum Direkt-Antrieb eingesetzt werden können. Derartige Torque-Motoren sind beispielsweise bekannt aus WO 03/095178 A1 oder der Veröffentlichung der Firma Rexroth Bosch Group "Synchron-Torquemotoren IndraDyn T", worauf bezüglich des inneren Aufbaus der Antriebs-Motoren 24, 25 verwiesen wird. Die Antriebs-Motoren 24, 25 weisen äußere Stator-Gehäuse 32, 33 auf, in denen nur angedeutete Rotoren 34, 35 angeordnet sind. Diese Rotoren sind gemäß der Erfindung an beiden Enden des jeweiligen Gehäuses 32 mit Abtriebs-Zahnritzeln 36, 37, 38, 39 versehen.

Die beiden dem rückwärtigen Axial-Lager 18 benachbarten Abtriebs-Zahnritzel 36,38 greifen in ein Abtriebs-Zahnritzel 40 der Abtriebs-Welle 8 ein, und zwar benachbart zum Axial-Lager 18 und zum Radial-Lager 19. Wie den Fig. 2 und 3 entnehmbar ist, liegt die Achse 15 nicht in der vertikalen Ebene 30, sondern ist um den halben Achsabstand a der Achsen 15, 16 seitlich gegenüber dieser Ebene 30 versetzt.

Die beiden der Kupplung 14 zugewandten Abtriebs-Zahnritzel 37,39 greifen entsprechend in einen Zahnkranz 41, der auf der Abtriebs-Welle 9 drehfest ausgebildet ist, wobei für die Achsanordnung das bereits Gesagte gilt. Der Zahnkranz 41 befindet sich zwischen den Radial-Lagern 22, 23 und benachbart zum Axial-Lager 21, das zwischen den Antriebs-Motoren 24,25 angeordnet ist. Der Durchmesser d beider Zahnkränze 40, 41 ist gleich und derart, dass der Zahnkranz 41 gerade nicht mit der neben ihm verlaufenden Abtriebs-Welle 8 kollidiert. Auch wenn die Achsen 15 bzw. 16 nicht in der vertikalen Ebene 30 angeordnet sind, werden durch die Anordnung der beiden Antriebs-Motoren 24, 25 zwischen den Abtriebs-Zahnritzeln 36, 38 bzw. 37, 39 und den zugeordneten Zahnkränzen 40 bzw. 41 wirkende Radialkräfte weitgehend kompensiert, da der Durchmesser D der vier untereinander gleichen Abtriebs-Zahnritzel 36 bis 39 groß ist gegenüber dem Durchmesser d der Zahnkränze 40,41. Es gilt: D ≥ 3d. Die Abtriebs-Zahoritzel 3 6, 38 und 37,39 liegen einander also angenähert diametral gegenüber.

Bei kleinen Extrudern kann es ausreichend sein, nur einen Antriebs-Motor vorzusehen. In diesem Fall würde in der Regel der obere Antriebs-Motor 25 weggelassen, also nur der untere Antriebs-Motor 24 eingesetzt. Aus dem Vorstehenden ergibt sich, dass der Antrieb der Abtriebs-Wellen 8, 9 gleichsinnig entsprechend den Drehrichtungspfeilen 42, 43 erfolgt.

## Patentansprüche

1. Antriebs-Einheit für eine Zwei-Schnecken-Maschine,
deren gleichsinnig drehantreibbare Schnecken-Wellen (5, 6) einen Achsabstand (a) aufweisen,
- mit zwei Abtriebs-Wellen (8, 9),
**--** deren zueinander parallele Achsen (15, 16) den Achsabstand (a) aufweisen,
--die zur koaxialen Verbindung mit den Schnecken-Wellen (5, 6) ausgebildet sind und
-- die mit je einem zur benachbarten Abtriebs-Welle (8, 9) kollisionsfreien Zahnkranz (40, 41) versehen sind,
und
- mit einem als Torque-Motor ausgebildeten Antriebs-Motor (24, 25), der
**--** ein Stator-Gehäuse (32, 33) und
-- einen im Stator-Gehäuse (32, 33) drehbar angeordneten Rotor (34, 35) enthält, **dadurch gekennzeichnet, dass** an beiden Enden des Rotors (34, 35) außerhalb des Stator-Gehäuses (32, 33) ein Abtriebs-Zahnritzel (36 bis 39) vorgesehen ist, das in je einen der genannten Zahnkränze (40,41) eingreift.

2. Antriebs-Einheit nach Anspruch 1, **dadurch gekennzeichnet, dass** die Dreh-Achse (28, 29) des Antriebs-Motors (24, 25) parallel zu den Achsen (15, 16) der Abtriebs-Wellen (8, 9) verläuft und in einer zu einer durch die Achsen (15, 16) aufgespannten Ebene (31) senkrechten Ebene (30) liegt, wobei die Ebenen (30, 31) einander mittig zwischen den Achsen (15, 16) schneiden.

3. Antriebs-Einheit nach Anspruch 1 oder 2, **dadurch gekennzeichnet, dass** die Abtriebs-Zahnritzel (36 bis 39) identischen Durchmesser D aufweisen und
dass die Zahnkränze (40, 41) identischen Durchmesser d aufweisen.

4. Antriebs-Einheit nach Anspruch 3, **dadurch gekennzeichnet, dass** für das Verhältnis des Durchmessers D der Abtriebs-Zahnritzel (36 bis 39) und den Durchmesser d der Zahnkränze (40, 41) gilt: D ≥ 3d.

5. Antriebs-Einheit nach Anspruch 2, **dadurch gekennzeichnet, dass** zwei Antriebs-Motoren (24, 25) vorgesehen sind, die spiegelsymmetrisch zu der durch die Achsen (15, 16) aufgespannten Ebene (31) angeordnet sind.

## Claims

1. Drive unit for a twin-screw machine, of which the screw shafts (5, 6), which can be driven in rotation in the same direction, have axial spacing (a),
- with two output shafts (8, 9),
-- the mutually parallel axes (15, 16) of which have the axial spacing (a),
-- which are configured for coaxial connection to the screw shafts (5, 6) and
-- which are provided with a respective crown gear (40, 41)
which does not collide with the adjacent output shaft (8, 9), and
- with a drive motor (24, 25) which is configured as a torque motor and has
-- a stator housing (32, 33) and
-- a rotor (34, 35) which is rotatably arranged in the stator housing (32, 33), **characterised**
**in that** at both ends of the rotor (34, 35), outside the stator housing (32, 33), a driven pinion (36 to 39) is provided which meshes with one of the said crown gears (40, 41), each.

2. Drive unit according to claim 1, **characterised**
**in that** the axis of rotation (28, 29) of the drive motor (24, 25) extends parallel to the axes (15, 16) of the output shafts (8, 9) and lies in a plane (30) perpendicular to the plane (31) spanned by the axes (15, 16), the planes (30, 31) intersecting each other centrally between the axes (15, 16).

3. Drive unit according to either 1 or 2, **characterised**
**in that** the driven pinions (36 to 39) have an identical diameter D and
**in that** the crown gears (40, 41) have an identical diameter d.

4. Drive unit according to claim 3, **characterised**
**in that** D ≥ 3d applies to the ratio of the diameter D of the driven pinions (36 to 39) and the diameter d of the crown gears (40, 41).

5. Drive unit according to claim 2, **characterised**
**in that** two drive motors (24, 25) arranged mirror-symmetrically to the plane (31) spanned by the axes (15, 16) are provided.

## Revendications

1. Unité d'entraînement pour une machine à deux vis sans fin,
dont les arbres de vis (5, 6) pouvant être entraînés dans le même sens de rotation présentent une distance d'axe en axe (a),
- avec deux arbres de sortie (8, 9),
-- dont les axes (15, 16) parallèles les uns aux autres présentent la distance d'axe en axe (a),
-- qui sont réalisés avec les arbres de vis (5, 6) pour la liaison coaxiale, et
-- qui sont dotés chacun d'une couronne dentée (40, 41) n'entrant pas en collision avec l'arbre de sortie (8, 9) adjacent,
et
- avec un moteur d'entraînement (24, 25) réalisé sous forme de moteur à couple, qui comprend
-- un carter de stator (32, 33) et
-- un rotor (34, 35) agencé de manière rotative dans le carter de stator (32, 33), **caractérisée en ce que** aux deux extrémités du rotor (34, 35) à l'extérieur du carter de stator (32, 33), un pignon de sortie (36 à 39) est prévu, qui s'engrène dans respectivement une desdites couronnes dentées (40, 41).

2. Unité d'entraînement selon la revendication 1, **caractérisée en ce que**
l'axe de rotation (28, 29) du moteur d'entraînement (24, 25) s'étend parallèlement aux axes (15, 16) des arbres de sortie (8, 9) et se trouve dans un plan (30) perpendiculaire à un plan (31) formé par les axes (15, 16), les plans (30, 31) se coupant les uns les autres au milieu entre les axes (15, 16).

3. Unité d'entraînement selon la revendication 1 ou 2, **caractérisée**
**en ce que** les pignons de sortie (36 à 39) présentent des diamètres D identiques et
**en ce que** les couronnes dentées (40, 41) présentent des diamètres d identiques.

4. Unité d'entraînement selon la revendication 3, **caractérisée en ce que**
entre le diamètre D des pignons de sortie (36 à 39) et le diamètre d des couronnes dentées (40, 41), on a le rapport : D ≥ 3d.

5. Unité d'entraînement selon la revendication 2, **caractérisée en ce que**
deux moteurs d'entraînement (24, 25) sont prévus, qui sont agencés de manière symétrique par rapport au plan (31) formé par les axes (15, 16).
